# EUROPEAN PATENT APPLICATION

(11) **EP 1 852 687 A1**
(43) Date of publication of application: **07.11.2007**
(21) Application number: 06113527.3
(22) Date of filing: 04.05.2006
(51) Int. Cl.: G01K 5/48

(54) **Integrated temperature sensor**

(71) Applicant: Koninklijke Philips Electronics N.V., 5621 BA Eindhoven (NL); Philips Corporate Intellectual Property GmbH, 52064 Aachen (DE)
(72) Inventor: The designation of the inventor has not yet been filed
(74) Representative: Van Velzen, Maaike Mathilde

(57) **Abstract**

A biochip has an integrated temperature sensor comprising a micro mechanical actuator (20) having a deformation dependent on temperature, and a detector (30) arranged to output a signal according to a deformation of the actuator. The actuator (comprising a thermally actuable polymer) can be formed of LC Liquid Crystal material in an elastomeric network. The detector (30) can be optical, magnetic or capacitive. The actuator can be arranged as a layer and the deformation be a curling of the layer.

## Description

This invention relates to integrated temperature sensing devices, and to corresponding methods, especially temperature sensing devices integrated into, for example, MEMS devices, into sensors, especially biosensors, into molecular diagnostic devices, into bioreactors and into microfluidic "systems on chip" or "lab on chip" and the like.

MEMS devices are known for many applications including biosensors and biochips for (bio)chemical analysis, such as molecular diagnostics, for a variety of medical, forensic and food applications. In general, biochips comprise a biosensor in most of which target molecules (e.g. proteins, DNA) are immobilized on biochemical surfaces with capturing molecules and subsequently detected using for instance optical, magnetic or electrical detection schemes.

"Thermo-Mechanical Responses of Liquid-Crystal Networks with a Splayed Molecular Organization" by Grietje N. Mol, Kenneth D. Harris, Cees W.M. Bastiaansen, and Dirk J. Broer is concerned with MEMS devices having a deformation dependent on temperature. It indicates that micro-integrated actuators such as MEMS devices are utilized in electronics, integrated optics, and medical and biomedical applications. Mechanical effects in the form of motion, power, or work as response to different types of stimuli have been used successfully to (re-)direct fluids in microfluidic systems. Most examples presented in the literature are based on microstructured inorganic layers, often obtained by lithographic means and sacrificial-layer technology. Fewer publications mention the use of polymers as the active layer in the actuator construction. Nevertheless, the use of polymers to build the actuator would have a number of benefits for special applications. Their thin-film processing is normally easier and better suited for large-area applications. In addition, the amplitude of their response is larger than that of inorganic materials. Of course, this is related to the low modulus and comes at the expense of the force or work that can be produced. The use of a liquid-crystalline polymeric system appears especially attractive because of its response time and amplitude. Various groups have demonstrated dimensional changes in liquid-crystal (LC) elastomers (LCE) induced by variations in temperature. The prevalent mechanism is based on changes in the molecular organization, which become particularly large at the transition from the aligned liquid-crystalline to the isotropic phase. In order to allow relatively large amplitudes to occur, the molecular rotational mobility must be sufficiently high, and therefore most publications refer to the class of LC elastomers with a flexible backbone structure and consequently relatively low elastic modulus.

This article discusses a new polymer system based on a densely crosslinked LC network and obtained by the photopolymerization of reactive mesogens. In this system the molecular order can be well controlled. The controlled nature of the molecular order not only relates to its degree and its direction, but also to the fact that it can be modulated locally via, for instance, changes in its local orientational boundary conditions, brought about by the application of local external fields or by lithographic exposure and polymerization-induced diffusion during polymerization. Lithographic exposure also enables the formation of micrometer-sized elements that can be integrated into microelectromechanical system (MEMS) devices. In addition LC networks form a good model system for all types of stimuli, and, in particular they can be activated by heat. A splayed molecular arrangement produced films that deform uniformly in a well-controlled manner. The films are monolithic in nature; that is to say that they are based on single-layer structures that are easy to make and to structure and that do not show problems common for multilayer structures, such as delamination or interfacial sliding during bending.

In many of the assays that can be carried out on a lab on a chip, environmental processing steps involving heating of the sample are essential. An example of this is the polymerase chain reaction (PCR), which is a well-established enzymatic method to amplify DNA by repeating a series of thermally controlled reaction steps. In the PCR reaction the number of amplified DNA molecules is doubled during each cycle. The thermocycling consists of three steps: melting of the double stranded DNA (denaturisation) to separate complementary strands, binding of the specific primers to the target site (annealing), and extension of the primers by a thermostable enzyme such as Taq polymerase (extension). Typical temperatures for the denaturation, annealing and extension steps are 94, 40-72, and 72°C, respectively. These temperatures have to be controlled accurately, e.g. preferably to within 0.5°C.

The specificity of a biosensor, typically present on a biochip, is improved by accurate control of the temperature. Temperature control is used, for instance, during a hybridization assay to regulate stringency of the binding of a target biomolecule to a functionalized surface, e.g. the binding of a DNA strand to its complementary strand. A high stringency, and therefore accurate temperature control, is required when for instance single point mutations are of interest. Besides being of high importance for hybridization assays, temperature control of a biosensor is needed in general. For example because many biomolecules are stable in a small temperature window (usually around 37 °C), or become de-activated when temperatures are outside of this temperature window.

In order to be able to control the temperature in a biochip accurately, it needs to be measured. Most commonly, this is done using a Resistive Thermal Device (RTD), which usually consists of a resistor strip or line integrated on the chip (e.g. gold or platinum). The principle used is that the electrical resistance of the chip varies (linearly) with temperature. A disadvantage is that the resistive strips are relatively large (on the order of: widths of microns and lengths of hundreds of microns) to achieve sufficient accuracy, so that it is not possible to measure the temperature locally on 1-10 micron scale, which would be useful for the assessment of temperature gradients.

An object of the invention is to provide alternative or improved integrated temperature sensing devices, and to corresponding methods. According to a first aspect, the invention provides:

An integrated temperature sensor comprising a micromechanical actuator comprising a thermally actuable polymeric material having a deformation dependent on temperature, and a detector arranged to output a signal according to a deformation of the actuator. This enables temperature sensing in integrated structures such as MEMS devices without all the difficulties associated with resistive thermal devices. In some embodiments the actuator is an elongate structure that changes its shape when the temperature changes. In other embodiments the actuator can be block-shaped and changes its volume when the temperature changes.

An optional additional feature is the actuator being formed of a thermally actuable polymeric material, e.g. a material with internal stresses, which can be released at a certain temperature. The polymeric material can be an elastomeric material, a shape memory polymer (SMP) such as a Chemical Hibernated Elastic memory material (CHEM), an LC (Liquid Crystal) material in an elastomeric network, etc.

The thermally actuable polymeric material can be a single shot material, i.e. it irreversibly changes its shape at a certain temperature, or it may be repeated able to cycle through shape changes.

Another optional feature is the detector comprising any of: an optical, magnetic or capacitive detector.

Another optional feature is the detector being arranged to detect many levels of deformation.

Another optional feature is the actuator being arranged as a layer and the deformation being a curling of the layer.

Another optional feature is the layer being a monolithic layer. This can help avoid problems of delamination and can simplify manufacturing.

Another such additional feature is the actuator having a length of less than 100 microns

Another aspect provides a biochip having means for analyzing a sample, and having the integrated temperature sensor set out above. An optional feature is integrated circuitry for processing the signal. Another such optional feature is the integrated circuitry comprising an integrated controller for an analysis process being sensed, a signal output by the sensor being coupled to the controller.

Other aspects of the invention include methods of manufacturing the integrated temperature sensor and methods of generating a temperature signal using the integrated temperature sensor.

Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

How the present invention may be put into effect will now be described by way of example with reference to the appended drawings, in which:
Figure 1 shows the variation in deformation of a thermally actuated LCE structure as a function of temperature,
Figure 2 shows polymer micro-actuators,
Figure 3 shows a general arrangement of a biosensor cell including thermal sensors,
Figure 4 shows a schematic view of an embodiment of a MEMS temperature sensor according to the present invention,
Figure 5 shows a schematic view of another embodiment of a temperature sensor according to the present invention, and
Figure 6 shows a schematic view of another embodiment of a temperature sensor according to the present invention.

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

In the following description and claims the term "thermally actuatable" or "thermally actuable" relates to a temperature dependent change in at least one dimension, which exceeds a linear movement generated by thermal expansion alone. Accordingly this term refers to an enhanced temperature dependent movement, enhanced compared with simple thermal expansion. This enhanced movement may be provided by a variety of physical arrangements, e.g. by mixing one material with another (such as a gel) or by the way the polymeric material is processed so that it tends to curl when heated or by the juxtaposition of two dissimilar materials, or the freezing-in of internal stresses that are released at a certain temperature with a significant change in shape or size, etc.

The present invention relates to integrated temperature sensors and to corresponding methods, especially temperature sensing devices integrated into MEMS devices, into sensors, especially biosensors, into molecular diagnostic devices, into bioreactors and into microfluidic "systems on chip" or "lab on chip" and the like. In almost any such device, e.g. biochip for (bio)chemical analysis, accurate temperature control, and hence accurate temperature measurements, may be important. The embodiments described are concerned with how to achieve a means of local measurement of the temperature in such a device, e.g. in a biochip/biosensor/PCR chamber, on a small scale, typically a scale of 1-100 microns, using a relatively low-cost solution. Embodiments of the present invention provide an integrated temperature sensitive polymer microscopic structure for temperature sensing. This is suitable for application in biochips for medical or biomedical analysis and other applications. The temperature-sensitive polymer microscopic elements can measure locally, on a 1 to 100 micron scale, temperatures in biochips for (bio)chemical analysis. Compared to existing solutions, this offers the advantages of local temperature measurement, assessing temperature gradients, and, potentially, this solution is cheaper than existing methods.

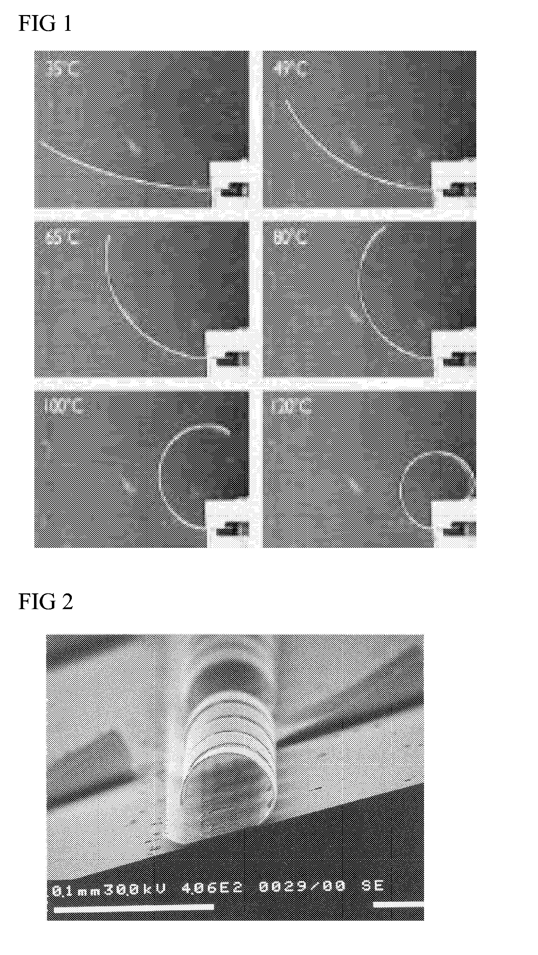

Several polymeric materials that respond to a change in temperature by deforming are known. All materials respond to temperature in some way but the thermal expansion coefficients are usually too low for simple and efficient actuators. In accordance with the present invention polymeric materials are used with a change in a dimension with temperature, which exceeds the change in dimension caused by thermal expansion. For example, the volume of polymer gels may depend upon temperature changes. The mechanism behind this is that, if a polymer molecule is placed in a solvent, the balance between, on the one hand, attractive forces between the polymer segments - that tend to shrink a polymer coil - and, on the other hand, the attractive forces between the polymer segments and the solvent molecules, changes with temperature. When the polymer-solvent system is carefully chosen and controlled, this effect can be magnified and appears as a rather sudden phase transformation. The polymer gel may be block-shaped or elongate. If the polymers are "tied together" forming a polymer network, it is possible to produce a micro-actuator. Such thermally activated gels can be, for example, polyacrylamide derivatives and polypeptides. Making a two- or multilayer film structure of these materials, or in combination with other polymeric materials, a film responding by bending to a temperature change is obtained. Another example is formed by shape memory polymers (SMP's). In fact, the thermally responsive polymer gels just discussed can be viewed as belonging to the group of materials known as SMP's. SMP's are commercially available from mNemoscience GmbH, Aachen Germany in either linear, thermoplastic multiblock copolymers or covalently cross-linked polymer networks. In chemically cross-linked shape memory networks the permanent shape is stabilized by the covalent net-points. The temporary shape can either be fixed by crystallized segment chains or by glass transition of the segment chains. SMP's are known from co-crylic acid-n-stearyl acrylate hydrogels. Other material systems are polyurethane open cellular (foam) structures and poly(styrene-*block*-butadiene). Polyurethane open cellular foams have been described by Sokolowski (Sokolowski et al., "Cold hibernated elastic memory (CHEM) self-deployable structures", Proc. SPIE 6th Annual Int. Symposium on Smart Structures and Materials, SPIE Proc. Vol. 3669 (1999) pp179-185). These materials exploit foam's elastic recovery and shape memory. In practice, these materials are deformed (compacted) at temperatures above their softening (glass transition) temperature, *T*_{g}, and when cooled below *T*_{g} they maintain their deformed state when the force is removed. Heating above *T*_{g} restores the original shape. The polymer may be block-shaped or elongate. Cross-linked polymeric materials can have a shape "frozen" in whe heated above the glass transition temperature or the melting point of the un-crosslinked material. This frozen stress can then be released when the temperature is raised again without the material melting as it is cross-linked. A variety of polymers can be deformed in this way, e.g. EPDM, polyethylene, etc. Yet a further example is a thermally responsive Liquid Crystal Elastomer LCE. An LCE is composed out of three main components: 1) an elastomer backbone, for example, silicone rubber or PDMS (poly dimethyl siloxane rubber), 2) side-chain liquid crystal molecules and 3) side-chain cross-linkers which interconnect the elastomer backbone strands and may also exhibit liquid crystalline properties. For example by incorporating LC (Liquid Crystal) material into an elastomeric network a material can be made which upon heating through a specific temperature (the nematic isotropic temperature) undergoes a transition in the backbone of the elastomer molecules and changes length. By careful control of processing conditions as discussed in above mentioned article by Mol et al, it is possible to obtain a gradient in orientation of LC molecules over the thickness of the film so that one side of the film contracts while the other expands. This creates a reversible rolling up of the film at a specific temperature. Figure 1 shows cross-section photos of such a thermally actuated LCE film curling up at various temperatures.

By controlling the shape of the LC molecules and the crosslink density of the elastomeric network, the relation between the shape of the film and the temperature can be tuned - see Figure 1. It is clear from Figure 1, that the shape of the film changes with temperature and therefore the shape can represent the local temperature.

In one aspect of the present invention, a film is structured into microscopic elements, by standard lithography. In this technique a light sensitive material (sometimes called photoresist or resist) is deposited onto a film comprising thermally actuatable polymeric material and exposed to a pattern of light. The exposed portion of the light sensitive material or "resist" becomes resistant to removal whereas the unexposed material may be removed easily. The patterned mask produced can be used to remove parts of the polymeric film, e.g. by etching. The present invention also includes within its scope that the thermally actuatable polymer material can be "designed" to be photosensitive. Accordingly, they can be structured in one lithographic process step, without the need for an additional masking resist layer. Typical sizes for the structures may be 10-100 microns in length, 1-10 microns in width, and sub-micron thickness. By integration of the elements in a biochip/biosensor/PCR chamber, the temperature may be assessed on a local scale by observation of the shape of the structure.

The shape of the microstructures may be observed by any suitable method and converted into a temperature value. For example the microstructures can be observed optically when the system is made optically transparent or at least partially transparent. An alternative is magnetic detection. The thermally actuatable polymer elements can contain magnetic particles such as magnetic nanoparticles, and the movement can be detected by using magnetic sensors, e.g. GMR, AMR, TMR or Hall effect sensors. Such sensors can be integrated within the substrate on which the sensor is located. Yet another alternative is capacitive detection. In this case, the polymer elements can include a conductive material, e.g. a conductive film, forming a first electrode, and a second, counter electrode is present in the substrate underneath. The two electrodes form a capacitor, and the deformation of the polymer element will result in a change in capacitance, which can be measured by standard techniques.

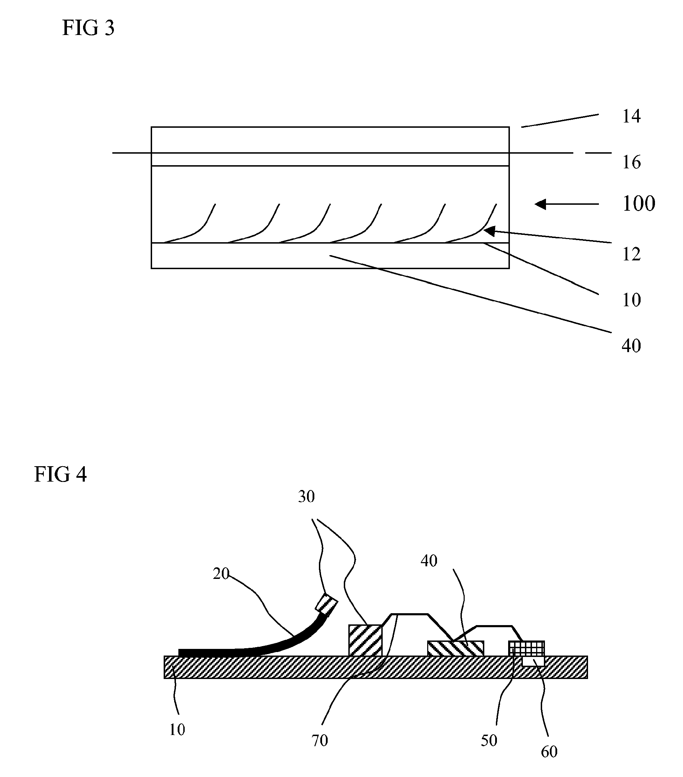

Figure 3 shows an example of an embodiment according to the present invention of a microfluidic chamber, which may be used with any of the embodiments of actuators according to the present invention. A microfluidic chamber 100, for example a PCR chamber, needs to be maintained at a certain temperature. The temperature inside the chamber 100 is monitored with the use of multiple elongate temperature sensitive elements/actuators 20 attached to the wall 10 of the chamber 100. These actuators 20 are arranged in arrays along and across the channel base and/or along a wall 10. One end of each elongate actuator 20 is fixed to a wall of the chamber 100, and the other end of the elongate actuator 20 forms a free part of the actuator curling away from the wall. A change in temperature will change the shape of the actuators 20, which is detected, e.g. by optical, magnetic, or electrical means (see later). The system can be arranged such that the change shape of each individual actuator 20 can be monitored separately. In such a case a detector 40 is provided to sense the change in the actuator 20 with temperature as well as read out electronics is provided, e.g. such that each actuator 20 can be individually selected and addressed. Considering the size of the actuators (10-100 micron in length, 1-10 micron in width), temperature gradients can therefore be measured on typical length scales of 1-10 micron (in the width direction) or 10-100 microns (in the length direction). Using an electronic read-out and feedback system, combined with a heating element 14 integrated in the chamber 100 (e.g. a resistive wire 16), active control of the temperature within the chamber 100 is possible.

Figure 4 shows a schematic view of a general embodiment of a biochip having an integrated sensor. On a substrate 10, an actuator 20 is formed with one end fixed and another end free to curl up as shown. There are many possible configurations of fixed and free parts. Although shown as a layer, which curls out of the plane of the substrate, the present invention includes within its scope arrangements, which curl parallel to the plane of the substrate. Parts of the actuator can be made to have different coefficients of deformation with temperature to create a non-linear response if desired for example. Also shown is a two-part deformation detector 30, having one part on the free end of the actuator and the other part fixed to the substrate. This is arranged to detect an amount of the deformation of the actuator. This can carry out a detection relative to one or more thresholds, or a continuous analog detection. The detector can be based on any suitable detection principle, e.g. optical, capacitive or magnetic principles or other technique, of which some specific embodiments have been shown above. A signal output by the detector is coupled via interconnect 70 to other elements of the biochip.

A signal processing circuit 40 is shown, which can process the signal by comparing to thresholds, by applying filtering or corrections for example, or by using the signal as an input to a control process. As an example only, the signal processing part is coupled to a valve 50 to control flow of a sample in a microchannel 60. The signal could also be used, for example, to control the temperature in the microchannel by (integrated) heating elements. Clearly this can be part of a more complex chip with other parts not illustrated. As the temperature sensor can be integrated in the manufacturing process, little additional manufacturing expense needs be incurred. The sensor can be arranged adjacent to a microregion, microchannel or chamber where temperature is to be measured, for increased accuracy. An array of such sensors can be arranged to detect temperature gradients, or to enable an average of several signals to be taken, to improve accuracy. Although often a reversible deformation is needed to enable continuous measurement, in some cases, an irreversible deformation will be useful, so that a maximum or minimum temperature can be measured and stored. Other applications for the temperature sensor than biochips are included within the scope of this invention.

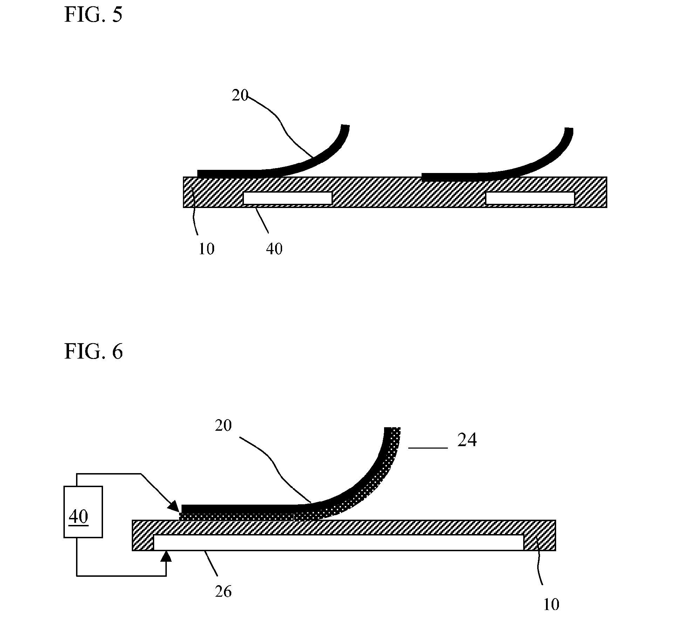

Figure 5 shows another embodiment using magnetic sensing of the actuator deformation. The temperature sensitive actuator element 20 is attached to a microfluidic channel wall 10 and contains magnetic materials, for example superparamagnetic particles, ferromagnetic particles are included within the thermally actuatable material forming actuator element 20, or a magnetic film is used. In the wall 10 of the microfluidic channel, magnetic field sensor elements 40 are integrated. For example the magnetic field sensor 40 may be a GMR, TMR, AMR or Hall effect sensor or any other suitable sensor. For some such sensors, typically the electrical resistance depends on the magnitude of a magnetic field present, which can be the magnetic field induced by the actuator or the magnetic field modulated, modified or changed by the position of the actuator. If the shape of the actuator changes, due to a change in temperature, the magnetic field experienced by the magnetic field sensor 40 changes, which is detected as a change in a physical property of the sensor such as its resistance and/or an output signal is generated representative of the magnetic field measured. In the case of the use of superparamagnetic particles, an external magnetic field is required to magnetize the particles. Summarizing this embodiment: the shape change of the actuator 20 caused by a temperature change, changes a magnetic field, which change is detected by a magnetic field sensor 40.

Figure 6 shows an embodiment using electrical, in this case, capacitive, detection. The temperature-sensitive actuators 20 contain an electrode 24. Another electrode 26 is integrated in the wall of the microfluidic channel 10 on which the element 20 is attached. The two electrodes 24, 26 form a capacitor, of which the capacitance can be measured with a simple electrical circuit 40. If, due to a temperature change, the shape of the actuator 20 changes, the capacitance between the electrodes 24 and 26 will change and can be detected by a sensing circuit 40.

Embodiments of the invention enable local measurement of the temperature in a biochip/biosensor/PCR chamber, on the scale of 1-10 microns, using a relatively low-cost solution. Temperature-gradient sensing will be possible. Potentially, the approach will be cost-effective compared to existing solutions.

Biochips for (bio)chemical analysis, such as molecular diagnostics, comprising e.g. a biosensor to detect target molecules (e.g. proteins, DNA), and any other application in which temperature sensing on a 1-10 micron scale is required.

Other variations within the scope of the claims can be envisaged by those skilled in the art.

## Claims

1. An integrated temperature sensor comprising a micro mechanical actuator (20) comprising a thermally actuable polymeric material having a deformation dependent on temperature, and a detector (30, 40) arranged to output a signal according to a deformation of the actuator.

2. The sensor of claim 1, the actuator comprising an elastomeric material.

3. The sensor of any previous claim, the actuator comprising an LC material in an elastomeric network.

4. The sensor of any previous claim, the detector (30, 40) comprising any of: an optical, magnetic or capacitive detector.

5. The sensor of any preceding claim, the detector (30, 40) being arranged to detect many levels of deformation.

6. The sensor of any preceding claim, the actuator being arranged as a layer and the deformation comprising a curling of the layer.

7. The sensor of claim 6, the layer being a monolithic layer.

8. The sensor of any preceding claim, the actuator having a length of less than 100 microns.

9. A biochip having means (50, 60) for analyzing a sample, and having the integrated temperature sensor of any preceding claim.

10. The biochip of claim 9 having integrated circuitry for processing the signal.

11. The biochip of claim 10, the integrated circuitry comprising an integrated controller for an analysis process being sensed, a signal output by the sensor being coupled to the controller.

12. A method of manufacturing an integrated temperature sensor comprising the steps of forming a micro mechanical actuator (20) comprising a thermally actuable polymeric material having a deformation dependent on temperature, and forming a detector (30, 40) arranged to output a signal according to a deformation of the actuator.

13. A method of generating a temperature signal by providing an integrated temperature sensor comprising a micro mechanical actuator (20) comprising a thermally actuable material having a deformation dependent on temperature, and using a detector (30, 40) to output a signal according to a deformation of the actuator.
